# EUROPEAN PATENT SPECIFICATION

(11) **EP 3 657 245 B1**
(45) Date of publication and mention of the grant of the patent: **18.08.2021**
(21) Application number: 19207040.7
(22) Date of filing: 05.11.2019
(51) Int. Cl.: G03B 13/00, G03B 13/32

(54) **DIOPTER ADJUSTMENT MECHANISM AND OPTICAL INSTRUMENT INCLUDING DIOPTER ADJUSTMENT MECHANISM**
DIOPTRIENANPASSMECHANISMUS UND OPTISCHES INSTRUMENT MIT DIOPTRIENANPASSMECHANISMUS
MÉCANISME DE RÉGLAGE DE DIOPTRE ET INSTRUMENT OPTIQUE COMPRENANT UN MÉCANISME DE RÉGLAGE DE DIOPTRE

(30) Priority: 22.11.2018 JP 2018219536
(43) Date of publication of application: 27.05.2020
(73) Proprietor: Panasonic Intellectual Property Management Co., Ltd., Osaka-shi, Osaka 540-6207 (JP)
(72) Inventor: MASE, Keisuke, Osaka-shi,, Osaka 540-6207 (JP); OGAWA, Tomohiko, Osaka-shi,, Osaka 540-6207 (JP); SASAKI, Masaaki, Osaka-shi,, Osaka 540-6207 (JP)
(74) Representative: Grünecker Patent- und Rechtsanwälte PartG mbB

(56) References cited:
- JP-A- 2002 040 535
- JP-A- 2003 233 104
- JP-A- 2015 072 291
- JP-A- 2016 029 441
- JP-A- 2017 058 402

## Description

### Technical Field

The present invention relates to a diopter adjustment mechanism for adjusting the dioptric power according to the user's visual acuity, and an optical instrument including the diopter adjustment mechanism.

### Background Art

A diopter adjustment mechanism as described in the preamble of claim 1 is already known from JP 2015 072291 A. Some optical instruments are provided with a diopter adjustment mechanism so that the dioptric power can be adjusted according to the user's visual acuity. The diopter adjustment mechanism is provided in the vicinity of an eyepiece portion of the optical instrument, and is configured such that the user can adjust the diopter while looking through a finder.

In optical instruments, particularly in small optical instruments such as cameras, the arrangement space for components is limited. Hence, a diopter adjustment mechanism needs to be downsized, and various configurations that occupy less space and can be assembled easily have been proposed (see following PLT1, PLT2 and PLT3).

### Citation List

### Patent Literatures

PLT1: JP 2002-196406 A
PLT2: JP 2013-130745 A
PLT3: JP 2016-29441 A

### Summary of Invention

### Technical Problem

A diopter adjustment mechanism of an optical instrument has a drive mechanism for driving a lens provided inside a finder in an optical axis direction, and is configured to adjust the diopter by rotating a diopter adjustment dial provided in the vicinity of the finder.

The diopter adjustment mechanism is configured to drive the lens inside the finder by rotating the diopter adjustment dial provided in the vicinity of the finder. Accordingly, since the diopter adjustment dial is provided in the optical instrument, foreign matter such as dust may enter the inside of the finder through a gap formed between the diopter adjustment dial and a main body case of the optical instrument. Preventing entry of foreign matter (dust, dirt) into the inside of an optical instrument is an important issue to be solved for an optical instrument.

In addition, in an optical instrument, particularly in high-end models, the appearance, ease of operation, and feel of operation are important comparing elements for the purchaser of the instrument. For example, if a diopter adjustment mechanism of an optical instrument has a configuration that prevents entry of foreign matter into the inside of the optical instrument, has an operation dial provided in an easily operable position not degrading the appearance, the operation dial being stably and smoothly rotatable without wobbling, and is capable of adjusting the diopter with high accuracy, the optical instrument will appear as being a high-quality and highly reliable excellent optical instrument, and give a good impression on the purchaser of the instrument.

An objective of the present invention is to provide a highly reliable diopter adjustment mechanism capable of preventing entry of foreign matter into the inside of an optical instrument, and an optical instrument including the diopter adjustment mechanism. Note that a secondary objective of the invention is to provide a diopter adjustment mechanism and an optical instrument including the diopter adjustment mechanism that give the user an excellent impression in terms of appearance, ease of operation, and feel of operation of the optical instrument.

### Solution to Problem

The above and other objects of the invention are achieved by the diopter adjustment mechanism according to claim 1 and the optical instrument according to claim 8. Preferred embodiments are claimed in the dependent claims.

### Advantageous Effects of Invention

The present invention can provide a highly reliable diopter adjustment mechanism capable of preventing entry of foreign matter such as dust into the inside of an optical instrument, and an optical instrument including the diopter adjustment mechanism.

### Brief Description of Drawings

Fig. 1 is a perspective view mainly showing the back side of a camera of a first embodiment according to the present invention;
   5
Fig. 2 is a perspective view showing a finder unit of the camera of the first embodiment;
Fig. 3 is an exploded perspective view of the finder unit of the camera of the first embodiment;
Fig. 4 is a perspective view showing a protruded state of a diopter adjustment dial in the camera of the first embodiment;
Fig. 5 is a transverse section of the finder unit of the camera of the first embodiment;
Fig. 6 is a longitudinal section of a diopter adjustment mechanism of the camera of the first embodiment;
Fig. 7 is an exploded perspective view showing a dustproof portion provided in a rear portion of a gear shaft of the camera of the first embodiment;
Fig. 8 is a cross-sectional view showing the dustproof portion provided around the rear portion of the gear shaft of the camera of the first embodiment;
Fig. 9 is a longitudinal section of the diopter adjustment dial of the camera according to the first embodiment;
Fig. 10 is a diagram showing an engagement state of a push-action mechanism of the diopter adjustment mechanism of the camera of the first embodiment;
Fig. 11 is a diagram schematically showing the positional relationship between a cam groove and a lock pin of the camera of the first embodiment at the time of engagement; and
Fig. 12 is an enlarged schematic diagram showing the arrangement of a first gear and a gear stopper of the camera of the first embodiment.

### Description of Embodiments

Hereinafter, a camera will be described with reference to the accompanying drawings as an embodiment according to an optical instrument including a diopter adjustment mechanism of the present invention. Note that the optical instrument of the present invention is not limited to the configuration of the camera described in the following embodiment, and is applicable to various optical instruments including a diopter adjustment mechanism.

Further, numerical values, shapes, configurations, steps, order of steps, and the like shown in the following embodiment are merely examples and do not limit the present invention. Of the components in the following embodiment, components not described in the independent claims indicating the highest level concept are described as optional components. Note that in each embodiment, the same reference sign may be assigned to the same element, and description may be omitted. Also, the drawings are schematic, and mainly show the constituent elements for ease of understanding.

First, various aspects of the diopter adjustment mechanism and the optical instrument of the present invention will be illustrated.

A diopter adjustment mechanism according to a first aspect of the present invention is
a diopter adjustment mechanism provided in an optical instrument, the diopter adjustment mechanism including:
a shaft body that has a diopter adjustment dial operated to perform diopter adjustment on a lens provided in a finder, and is integrally rotated in response to an operation of the diopter adjustment dial;
a driving unit that moves the lens in an optical axis direction by rotation of the shaft body;
bearing portions that rotatably hold the shaft body in the vicinity of both ends of the shaft body; and
a dustproof portion that is arranged between the bearing portions of the shaft body, blocks a first space continuous with an arrangement space of the diopter adjustment dial from a second space continuous with an arrangement space of the lens in a space around the shaft body, is circumferentially rotatable with respect to an outer peripheral surface of the shaft body, and is slidable in an axial direction of the shaft body.

The diopter adjustment mechanism configured as described above can prevent entry of foreign matter such as dust into the inside of an optical instrument, and becomes a component of a highly reliable optical instrument.

In a diopter adjustment mechanism according to a second aspect of the present invention, the dustproof portion of the first aspect may include
a dustproof ring penetrated by the shaft body, and slidable in the axial direction with respect to the outer peripheral surface of the shaft body, and
a ring stopper circumferentially rotatable with respect to the outer peripheral surface of the shaft body, and defining a position of the dustproof ring in the axial direction of the shaft body, and
the ring stopper may be joined to a member integrally formed with a member including the bearing portion, and the dustproof ring may be held so as to be freely movable around the shaft body.

A diopter adjustment mechanism according to a third aspect of the present invention may be configured such that in the first or second aspect, one of the bearing portions holds an outer peripheral surface of the diopter adjustment dial.

A diopter adjustment mechanism according to a fourth aspect of the present invention may be configured such that in any one of the first to third aspects, the diopter adjustment dial repeats stored and protruded states with respect to a main body of the optical instrument each time the diopter adjustment dial is pressed in the axial direction.

A diopter adjustment mechanism according to a fifth aspect of the present invention may further include a stopper that inhibits rotation of the shaft body in the stored state of the diopter adjustment dial in the fourth aspect.

A diopter adjustment mechanism according to a sixth aspect of the present invention may be configured such that in the fifth aspect, the stopper comes off an engaging portion provided on the shaft body in transition from the stored state to the protruded state of the diopter adjustment dial.

A diopter adjustment mechanism according to a seventh aspect of the present invention may be configured such that any one of the first to sixth aspects further includes a click ball pressed against an unevenness formed in the shaft body, and a clicking sound is generated in accordance with rotation of the diopter adjustment dial.

An optical instrument according to an eighth aspect of the present invention includes the diopter adjustment mechanism according to any one of the first to seventh aspects.

### <<First embodiment>>

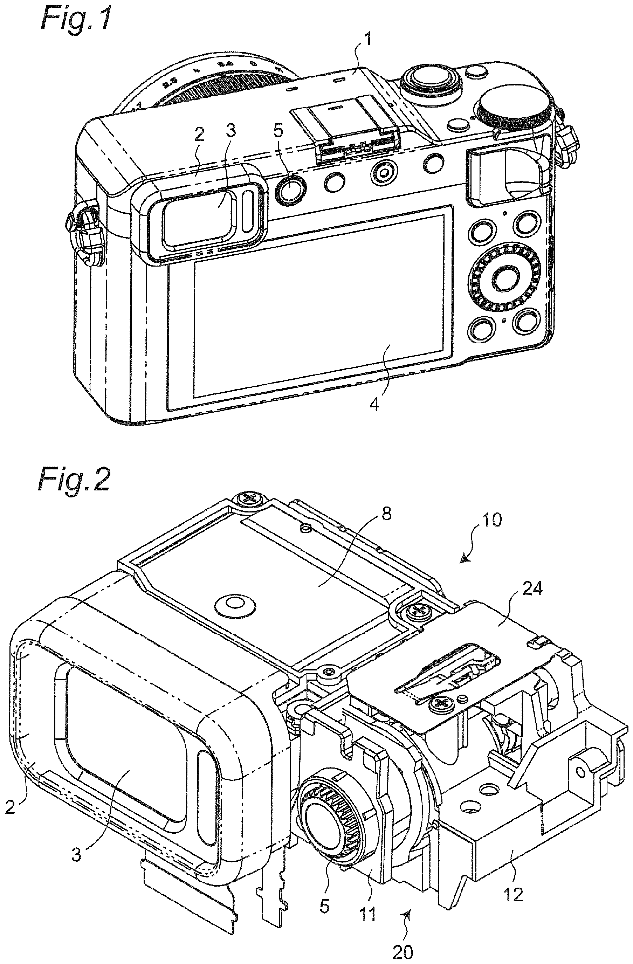

Hereinafter, a first embodiment according to an optical instrument including a diopter adjustment mechanism of the present invention will be described with reference to the drawings. Fig. 1 is a perspective view mainly showing the back side of a camera which is an optical instrument of the first embodiment.

A camera 1 which is an optical instrument of the first embodiment shows a digital single-lens camera as an example. As shown in Fig. 1, an eye cup 2 provided in an eyepiece portion, a finder 3, a monitor 4, and various push buttons and dials are provided on the back side of the camera 1. A diopter adjustment dial 5 for adjusting the diopter according to the user's visual acuity while looking through the finder 3 is provided in the vicinity of the eye cup 2.

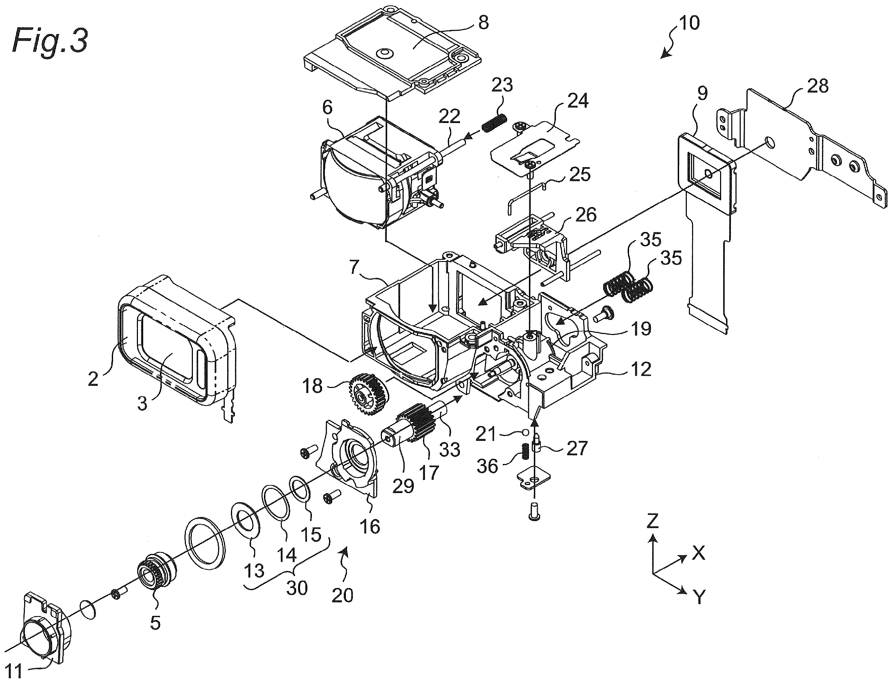

Fig. 2 is a perspective view showing a finder unit 10 including the eye cup 2 which is an eyepiece portion of the camera 1. The finder unit 10 includes a diopter adjustment mechanism 20 having the diopter adjustment dial 5. Fig. 3 is an exploded perspective view of the finder unit 10. In Fig. 3, for convenience, X, Y and Z axes orthogonal to one another are shown. The optical axis direction of the finder unit 10 is the X axis direction in the first embodiment. Additionally, in the description of the first embodiment, the subject side (lens side) of the camera 1 is referred to as the front, and the eyepiece side is referred to as the rear. In Fig. 3, the direction indicated by the X-axis arrow is the front.

In the finder unit 10, a lens unit 6 is arranged in front of the eye cup 2, and a lens of the lens unit 6 can be driven in the optical axis direction (longitudinal direction) with respect to a lens unit case 7 accommodating the lens unit 6. An upper part of the lens unit case 7 is covered with a lens unit cover 8. In the finder unit 10, a small display 9 is provided at the front end (upper right end in Fig. 3) of the lens unit case 7. The display 9 is configured such that the output from an imaging device can be displayed on the display 9, and the user can check the output with the finder 3 through the lens unit 6. Note that a heat sink 28 is attached to the display 9.

Further, in the finder unit 10, a drive mechanism, an operation mechanism, and the like of the diopter adjustment mechanism 20 are provided on the side of the lens unit 6, and the lens of the lens unit 6 is driven in the optical axis direction by rotation of the diopter adjustment dial 5 to adjust the diopter. The finder unit 10 is provided with a holding shaft 22 extending in the optical axis direction, and the lens of the lens unit 6 guided by the holding shaft 22 is constantly energized toward the eyepiece by a spring 23. For this reason, the lens of the lens unit 6 is smoothly driven in the optical axis direction without wobbling, by rotation of the diopter adjustment dial 5.

The diopter adjustment mechanism 20 of the first embodiment has a dustproof portion 30 described later, and is capable of preventing entry of foreign matter (dust, dirt, and the like) into the inside of the finder unit 10, particularly into the arrangement space (internal space) of the lens unit 6 and the display 9.

Further, the diopter adjustment mechanism 20 of the first embodiment is capable of storing the diopter adjustment dial 5 inside the camera 1 by pressing (pushing) the diopter adjustment dial 5 when diopter adjustment is unnecessary. On the other hand, when the diopter is to be adjusted, the diopter adjustment dial 5 is caused to protrude from the camera 1 by pressing (pushing) an exposed surface of the diopter adjustment dial 5 stored inside the camera. The diopter adjustment mechanism 20 has a so-called push-action mechanism that is repeatedly stored and protruded with each push. With the diopter adjustment mechanism 20 configured in this manner, the diopter adjustment dial 5 is disposed in a predetermined position with high accuracy in both the stored and protruded states of the diopter adjustment dial 5, and has a highly reliable configuration that does not wobble.

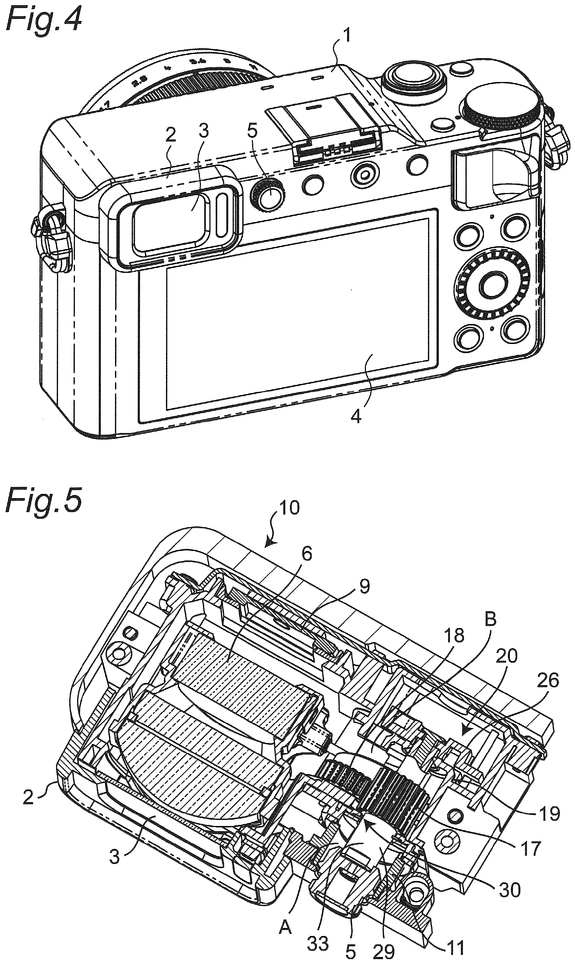

In the diopter adjustment mechanism 20 of the first embodiment, when the diopter adjustment dial 5 protrudes from the camera 1, rotation of the diopter adjustment dial 5 is enabled, and the rotation of the diopter adjustment dial 5 drives the lens of the lens unit 6 in the optical axis direction, whereby the diopter can be adjusted. On the other hand, when the diopter adjustment dial 5 is stored inside the camera 1, rotation of the diopter adjustment dial 5 is disabled, diopter adjustment is inhibited, and a locked state is established. Note that the camera 1 shown in Fig. 1 is in a locked state where the diopter adjustment dial 5 is stored inside the camera 1. Fig. 4 is a perspective view showing the camera 1 of the first embodiment in a diopter adjustable state where the diopter adjustment dial 5 protrudes from the camera 1.

### [Configuration of diopter adjustment mechanism 20]

Hereinafter, a specific configuration of the diopter adjustment mechanism 20 of the first embodiment will be described. As shown in the exploded perspective view of the finder unit 10 in Fig. 3, the diopter adjustment mechanism 20 of the first embodiment is configured such that rotation of the diopter adjustment dial 5 drives the lens of the lens unit 6 in the optical axis direction. The diopter adjustment mechanism 20 is provided on the side of the lens unit 6, and is arranged inside a diopter adjustment case 12 provided on the side of the lens unit case 7. Note that while the lens unit case 7, the diopter adjustment case 12, and a gear case 19 are the same component and are configured integrally in the first embodiment, the components may be configured separately.

In the diopter adjustment mechanism 20, the diopter adjustment dial 5 is fixed to a gear shaft 33 of a first gear 17, and rotation of the diopter adjustment dial 5 rotates a second gear 18 meshed with the first gear 17. With this, a cam formed on the second gear 18 moves the lens of the lens unit 6 in the optical axis direction. In the first embodiment, a driving unit serving as a lens drive mechanism of the diopter adjustment mechanism 20 includes the first gear 17 including the gear shaft 33, the second gear 18 on which the cam is formed, and a mechanism for driving the lens of the lens unit 6 in the optical axis direction by an operation of the cam. A gear and a cam are used as power transmission means in the driving unit of the diopter adjustment mechanism 20.

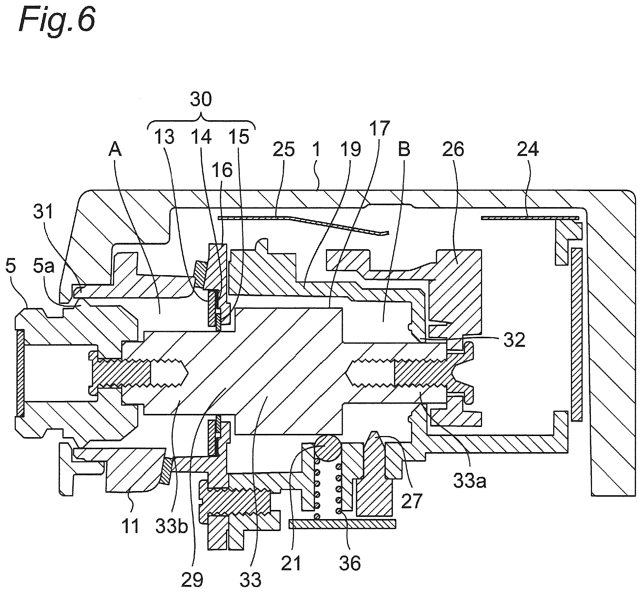

Fig. 5 is a transverse section of the finder unit 10 including the diopter adjustment mechanism 20 cut along the optical axis of the finder 3. Fig. 6 is a longitudinal section cut along the rotation axis of the diopter adjustment dial 5 of the diopter adjustment mechanism 20. As shown in Figs. 5 and 6, the diopter adjustment dial 5 is joined so as to form a shaft body 29 integral with the gear shaft 33 of the first gear 17. The shaft body 29 formed of the diopter adjustment dial 5 and the gear shaft 33 of the first gear 17 is held so as to be rotatable in the circumferential direction of the shaft body 29 and slidable in the axial direction, by bearing portions (31, 32) provided in two locations which are the vicinity of an end portion on the protruding side of the shaft body 29 and the vicinity of an end portion on the inner side of the mechanism. That is, the shaft body 29 is rotatably and slidably held by the bearing portions (31, 32) in the vicinity of both end portions of the shaft body 29. Note that in the present invention, the vicinity of an end portion of the shaft body (29) where the bearing portion (31, 32) is provided is a position indicated by about 5 to 15% of the total length of the shaft body (29) from the end portion. Since the bearing portions (31, 32) of the present invention are configured to be slidable in the axial direction with respect to the shaft body (29) as described later, the bearing portions are set by taking into consideration the sliding distance in the axial direction.

### [Bearing portion]

The first bearing portion 31 rotatably holding the vicinity of the protruding side end portion of the shaft body 29 is provided to hold an outer peripheral surface of the diopter adjustment dial 5. The first bearing portion 31 is an inner peripheral surface (bearing surface) of a diopter adjustment dial cover 11 (see Fig. 3) provided so as to cover the outer peripheral surface of the diopter adjustment dial 5. A protrusion 5a is formed over the entire outer peripheral surface of a side surface of the diopter adjustment dial 5. A tip end portion of the protrusion 5a is rotatably and slidably held by the inner peripheral surface (bearing surface) of the diopter adjustment dial cover 11. Accordingly, the spacing between the inner peripheral surface (bearing surface) of the diopter adjustment dial cover 11 and the tip end portion of the protrusion 5a of the diopter adjustment dial 5 is set to the minimum gap allowing smooth rotation and sliding of the diopter adjustment dial 5. The minimum gap between the inner peripheral surface (bearing surface of first bearing portion 31) of the diopter adjustment dial cover 11 and the tip end portion of the protrusion 5a of the diopter adjustment dial 5 is preferably 0.03 mm to 0.06 mm, for example. In addition, since the diopter adjustment mechanism has a push-action mechanism in which the diopter adjustment dial 5 is repeatedly stored and protruded, the bearing surface of the first bearing portion 31 can reliably hold the protrusion 5a of the diopter adjustment dial 5 in an axial (longitudinal) sliding section.

Note that while the first embodiment describes an example in which the protrusion 5a (protruding portion) is formed on the diopter adjustment dial 5, a protruding portion may be formed on the inner peripheral surface of the diopter adjustment dial cover 11 to serve as a bearing portion, and the bearing portion may be configured to rotatably and slidably hold the outer peripheral surface of the side surface of the diopter adjustment dial 5.

On the other hand, the second bearing portion 32 rotatably holding the vicinity of the mechanism inner-side end portion of the shaft body 29 is configured such that the gear case 19 (see Fig. 3) rotatably holds a front shaft 33a of the gear shaft 33 led to the front (mechanism inner-side) of the first gear 17. The second bearing portion 32 rotatably holding the front shaft 33a of the gear shaft 33 is provided in a front end portion of the gear case 19. The spacing between an inner peripheral surface (bearing surface) of the second bearing portion 32 and an outer peripheral surface of the front shaft 33a is set to the minimum gap allowing smooth rotation of the front shaft 33a. Further, the inner peripheral surface (bearing surface) of the second bearing portion 32 and the outer peripheral surface of the front shaft 33a are held so as to be smoothly slidable in the axial direction (longitudinal direction), to enable smooth movement of the diopter adjustment dial 5 at the time of storage and protrusion. Note that the minimum gap between the inner peripheral surface (bearing surface) of the second bearing portion 32 and the outer peripheral surface of the front shaft 33a is preferably 0.01 mm to 0.04 mm, for example.

As described above, in the first embodiment, the shaft body 29 in which the diopter adjustment dial 5 and the gear shaft 33 are integrally formed is reliably held in a smoothly rotatable and slidable manner by the two bearing portions (31, 32) in the vicinity of both ends of the shaft body 29, with the minimum gap formed between the shaft body 29 and the bearing portions. As a result, in the configuration of the first embodiment, wobbling of the diopter adjustment dial 5 exposed to the outside of the camera 1 is prevented, and smooth rotation of the diopter adjustment dial 5 is ensured.

### [Dustproof portion 30]

In the diopter adjustment mechanism 20 of the first embodiment, the dustproof portion 30 is provided to prevent entry of foreign matter (dust, dirt, and the like) into the arrangement space (internal space) of the lens unit 6 or the display 9 through a slight gap between the diopter adjustment dial 5 and the diopter adjustment dial cover 11 or the like. The dustproof portion 30 is provided on a rear shaft 33b of the gear shaft 33 led to the rear (eyepiece side) of the first gear 17, and is arranged in front of the diopter adjustment dial 5. That is, the dustproof portion 30 is arranged between the first bearing portion 31 and the second bearing portion 32 in the shaft body 29.

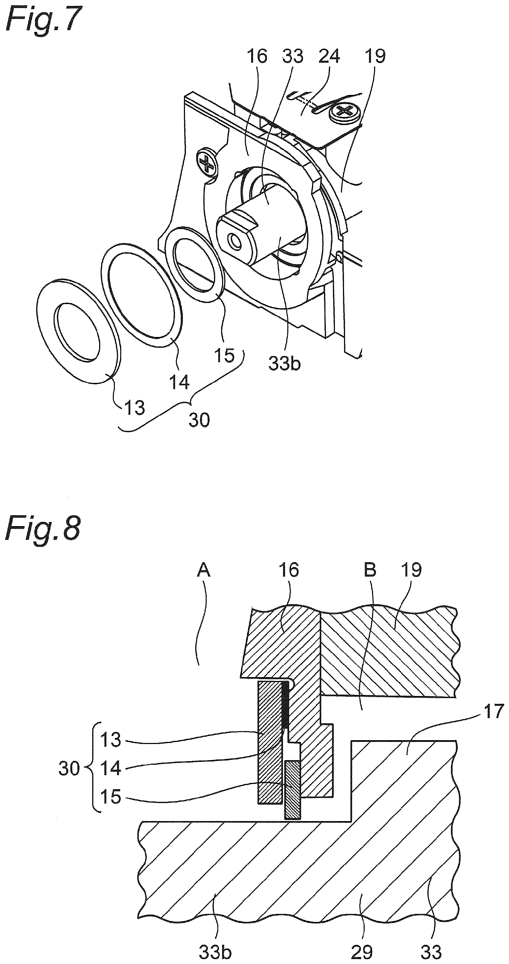

Fig. 7 is an exploded perspective view showing the dustproof portion 30 provided on the rear shaft 33b of the gear shaft 33. Fig. 8 is a cross-sectional view showing the dustproof portion 30 provided around the rear shaft 33b. As shown in Figs. 7 and 8, the dustproof portion 30 has a ring shape penetrated by the rear shaft 33b. The dustproof portion 30 includes a dustproof ring 15 penetrated by the rear shaft 33b (shaft body 29). A slight minimum gap allowing smooth sliding of the dustproof ring 15 on the rear shaft 33b in the axial direction (longitudinal direction) is formed between an inner peripheral surface of the dustproof ring 15 and an outer peripheral surface of the rear shaft 33b. Note that the inner peripheral surface of the dustproof ring 15 and the outer peripheral surface of the rear shaft 33b are polished so as to slide smoothly. The minimum gap between the inner peripheral surface of the dustproof ring 15 and the outer peripheral surface of the rear shaft 33b is preferably 0.01 mm to 0.03 mm, for example.

The dustproof portion 30 includes a ring stopper 13 for defining the position of the dustproof ring 15 in the axial direction of the shaft body 29. The ring stopper 13 is fixed to a ring holding plate 16 by joining means such as a double-sided tape (adhesive material) 14, and the ring holding plate 16 is fixed to the gear case 19. Accordingly, the dustproof ring 15 is held so as to be freely movable in a space between the ring stopper 13 and the ring holding plate 16 when the shaft body 29 (gear shaft 33) moves in the axial direction (longitudinal direction). Hence, the dustproof ring 15 slides on the outer peripheral surface of the rear shaft 33b. Although the dustproof ring 15 thus slides on the outer peripheral surface of the rear shaft 33b, since the ring stopper 13 is provided, the dustproof ring 15 is held in a predetermined position in the axial direction of the shaft body 29 with respect to the gear case 19.

As described above, the dustproof portion 30 has the dustproof ring 15 penetrated by the shaft body 29 and axially slidable with respect to the outer peripheral surface of the shaft body 29, and the ring stopper 13 circumferentially rotatable with respect to the outer peripheral surface of the shaft body 29 and defining the position of the dustproof ring 15. Additionally, the ring stopper 13 is joined to the ring holding plate 16 integrally formed with the gear case 19 including the second bearing portion 32 by the double-sided tape 14 (joining means), and the dustproof ring 15 is held so as to be freely movable on the outer peripheral surface of the shaft body 29.

As shown in the transverse section of Fig. 5, there is a risk that foreign matter may enter through the gap around the diopter adjustment dial 5 provided near the finder 3. In the diopter adjustment mechanism 20 of the first embodiment, even if foreign matter enters through the gap around the diopter adjustment dial 5 and enters a first space A (see Fig. 5) continuous with the arrangement space of the diopter adjustment dial 5, since the dustproof portion 30 is provided on the rear shaft 33b, entry of the foreign matter into a second space B (see Fig. 5) continuous with the arrangement space of the lens unit 6 and the display 9 is prevented. As described above, the dustproof portion 30 is arranged between the first bearing portion 31 and the second bearing portion 32 of the shaft body 29, and is provided so as to block the first space A continuous with the arrangement space of the diopter adjustment dial from the second space B continuous with the arrangement space of the lens unit 6 in the space around the shaft body 29. Thus, entry of foreign matter into the second space B is prevented. As shown in Fig. 5, the second space B closed by the dustproof portion 30 is a position close to the arrangement space of the lens unit 6 and the display 9, and is a continuous space with no obstruction. For this reason, in the case where the dustproof portion 30 is not provided in the diopter adjustment mechanism, foreign matter that enters through the gap of the diopter adjustment dial enters the arrangement space of the lens unit and the display directly, and will cause a serious defect.

As described above, in the diopter adjustment mechanism 20 of the first embodiment, the dustproof portion 30 is arranged between the bearing portions (31, 32) of the shaft body 29, and is configured to block the first space A continuous with the arrangement space of the diopter adjustment dial 5 from the second space B continuous with the arrangement space of the lens in the space around the shaft body 29. Further, the dustproof portion 30 is circumferentially rotatable with respect to the outer peripheral surface of the shaft body 29, and is slidable in the axial direction of the shaft body 29. That is, in the configuration of the first embodiment, since the dustproof portion 30 is provided around the rear shaft 33b of the gear shaft 33, even if foreign matter enters through the gap around the diopter adjustment dial 5, the dustproof portion 30 can prevent entry of the foreign matter into the arrangement space (second space B) of the lens unit 6 and the display 9.

In the dustproof portion 30, the dustproof ring 15 is held so as to be freely movable around the rear shaft 33b by the ring stopper 13 and the ring holding plate 16. For this reason, the shaft body 29 including the gear shaft 33 can be reliably held in a rotatable manner by the bearing portions (31, 32) at both end portions of the shaft body 29 with a slight minimum gap formed between the shaft body 29 and the bearing portions, the arrangement position of the shaft body 29 being unrestrained by the dustproof ring 15. In addition, in the manufacturing stage of the diopter adjustment mechanism 20, when a unit in which the shaft body 29 is temporarily held by the second bearing portion 32 and the dustproof portion 30 is assembled so as to be held by the first bearing portion 31, mounting variations of the unit can be absorbed by the dustproof portion 30. As a result, the configuration of the diopter adjustment mechanism 20 of the first embodiment makes it possible to provide a bearing portion on the outermost part of the optical instrument such as the camera 1, and can highly accurately maintain the position of the diopter adjustment mechanism 20 with respect to the external case of the optical instrument. Hence, the diopter adjustment mechanism 20 of the first embodiment can be easily arranged with high accuracy in an optical instrument, and a highly reliable optical instrument can be provided.

Note that while the dustproof ring 15 of the dustproof portion 30 has a ring shape (annular shape), the ring shape is not specified as a circle, and may be any shape as long as it can slide on the outer peripheral surface of the shaft body according to the shape of the outer peripheral surface of the shaft body. Further, the ring stopper 13 of the dustproof portion 30 may be configured in any way as long as it holds the dustproof ring 15 so as to be freely movable on the outer peripheral surface of the shaft body 29, and, together with the dustproof ring 15, prevents entry of foreign matter into the arrangement space (second space B) of the lens unit 6 and the display 9.

### [Push-action mechanism]

The diopter adjustment mechanism 20 of the first embodiment has a push-action mechanism in which the diopter adjustment dial 5 is repeatedly stored and protruded.

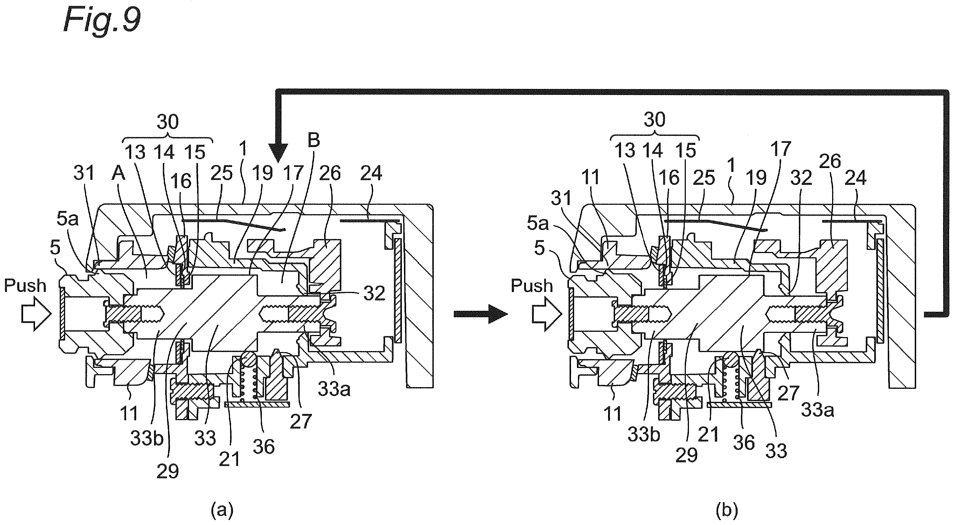

Here, (a) and (b) of Fig. 9 are longitudinal sections cut along the rotation axis of the diopter adjustment dial 5. Specifically, (a) of Fig. 9 is a diagram showing a state where the diopter adjustment dial 5 is protruded, and (b) of Fig. 9 is a diagram showing a state where the diopter adjustment dial 5 is stored. The push-action mechanism of the diopter adjustment mechanism 20 is configured to repeat the protruded state shown in (a) of Fig. 9 and the stored state shown in (b) of Fig. 9 each time the diopter adjustment dial 5 is pressed (pushed).

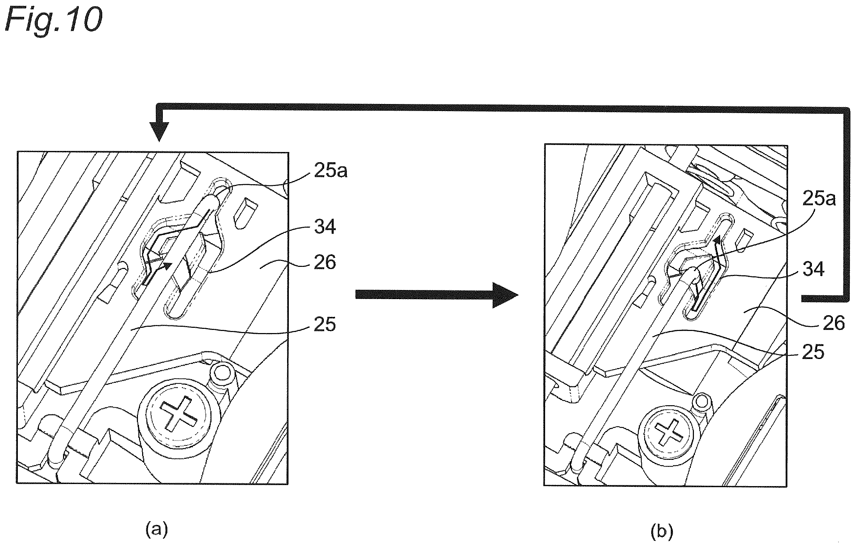

Fig. 10 is a diagram showing an engagement state of a cam groove 34 and a lock pin 25 of a lock member 26 of the push-action mechanism of the diopter adjustment mechanism 20. Specifically, (a) of Fig. 10 shows the protruded state of the diopter adjustment dial 5, and (b) of Fig. 10 shows the stored state of the diopter adjustment dial 5.

As described above, the shaft body 29 in which the diopter adjustment dial 5 and the gear shaft 33 are integrally formed is held so as to be circumferentially rotatable and axially (longitudinally) slidable by the two bearing portions (31, 32) in the vicinity of both ends of the shaft body 29. The shaft body 29 is joined to the lock member 26 (see Figs. 3, 5, 6, and 9) in the mechanism inner-side end portion. The shaft body 29 and the lock member 26 are configured to move together in the longitudinal direction. The shaft body 29 and the lock member 26 are constantly energized toward the eyepiece (backward) by an elastic member such as a spring 35 (see Fig. 3).

On the other hand, the lock pin 25 engaged with the cam groove 34 formed in the lock member 26 is joined and fixed to the gear case 19 in which the second bearing portion 32 is provided, through the lock plate 24 (see Fig. 3). Accordingly, when the user presses (pushes) the diopter adjustment dial 5, the lock member 26 is moved together with the shaft body 29 integrated with the diopter adjustment dial 5. As a result, an engaging portion 25a of the lock pin 25 is relatively moved along the cam groove 34 formed in the lock member 26.

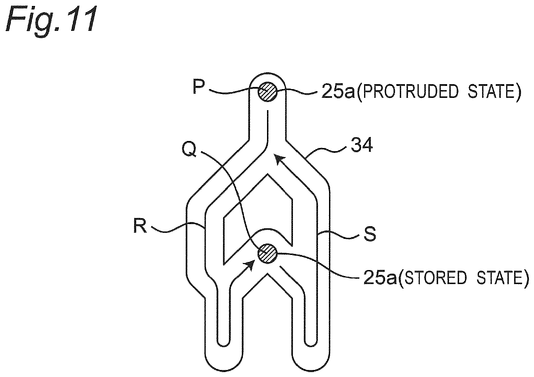

Fig. 11 is a diagram schematically showing the positional relationship between the cam groove 34 and the engaging portion 25a of the lock pin 25 at the time of engagement. In Fig. 11, when the engaging portion 25a of the lock pin 25 is in the position of reference sign P, the diopter adjustment dial 5 is in the protruded state. Meanwhile, when the engaging portion 25a of the lock pin 25 is in the position of reference sign Q, the diopter adjustment dial 5 is in the stored state.

When the engaging portion 25a of the lock pin 25 is in the position of reference sign P (protruded state), the lock member 26 (cam groove 34) is moved by pressing (pushing) the diopter adjustment dial 5. As a result, the engaging portion 25a of the lock pin 25 relatively moves along the cam groove 34 along the path indicated by arrow R to arrive at the position (stored state) indicated by reference sign Q. Meanwhile, when the engaging portion 25a of the lock pin 25 is in the position of reference sign Q (stored state), the lock member 26 (cam groove 34) is moved by pressing (pushing) the diopter adjustment dial 5. The engaging portion 25a of the lock pin 25 relatively moves along the cam groove 34 along the path indicated by arrow S. As a result, the engaging portion 25a of the lock pin 25 arrives at the position (protruded state) indicated by reference sign P in the cam groove 34.

As described above, in the diopter adjustment mechanism 20 of the first embodiment, the diopter adjustment dial 5 is configured to repeat the protruded and stored states each time the diopter adjustment dial 5 is pressed (pushed). Since the diopter adjustment mechanism 20 of the first embodiment has a push-action mechanism, the diopter adjustment mechanism 20 provided in the vicinity of the finder 3 can be adjusted easily and reliably. In addition, when diopter adjustment is unnecessary, the diopter adjustment dial 5 may be stored to prevent inadvertent touching of the diopter adjustment dial 5 by the user during operation of the camera, and to make the appearance of the instrument simple and neat.

### [Gear stopper mechanism and click mechanism]

The diopter adjustment mechanism 20 of the first embodiment is provided with a gear stopper mechanism for inhibiting diopter adjustment when the diopter adjustment dial 5 is stored.

In the protruded state of the diopter adjustment dial 5 shown in (a) of Fig. 9, a gear stopper 27 is arranged directly below the front shaft 33a of the first gear 17 provided on the shaft body 29. The gear stopper 27 is fixed to the gear case 19 and does not move together with the two bearing portions (31, 32). The tip end of the gear stopper 27 has a shape corresponding to the teeth shape of the first gear 17, and is formed so as to be able to lock the teeth of the first gear 17. In the stored state of the diopter adjustment dial 5 shown in (b) of Fig. 9, the tip end of the gear stopper 27 locks the teeth of the first gear 17 and rotation of the first gear 17 is inhibited.

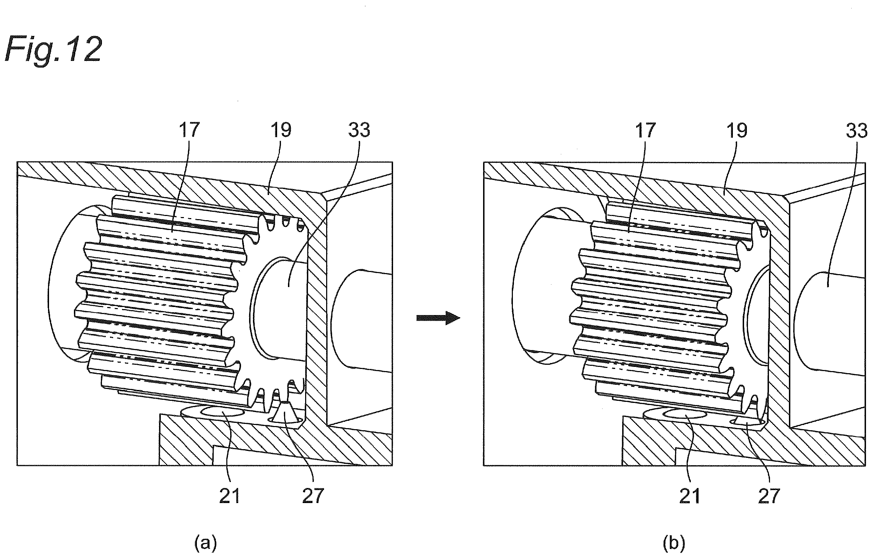

Fig. 12 is an enlarged schematic diagram showing the arrangement of the first gear 17 and the gear stopper 27. In Fig. 12, (a) shows the case where the diopter adjustment dial 5 is in the protruded state, and (b) shows the case where the diopter adjustment dial 5 is in the stored state. As shown in (b) of Fig. 12, when the diopter adjustment dial 5 is in the stored state, the tip end of the gear stopper 27 is reliably engaged with the teeth of the first gear 17, and rotation of the first gear 17 is inhibited.

Note that while the configuration of the first embodiment includes the gear stopper mechanism for inhibiting rotation of the shaft body 29 in the gear portion as described above, the present invention is not limited to such a configuration. For example, the shaft body 29 may have an engaging portion of a different shape, and the engaging portion may engage with a stopper in the stored state of the diopter adjustment dial 5 to inhibit rotation of the shaft body 29.

Since the diopter adjustment mechanism 20 is provided with the gear stopper mechanism (27) as described above, rotation of the shaft body 29 including the diopter adjustment dial 5 is inhibited in the stored state of the diopter adjustment dial 5, and adjustment of the diopter is surely inhibited. As described above, with the optical instrument including the diopter adjustment mechanism 20, it is possible to reliably prevent inadvertent adjustment of the diopter by the user.

Furthermore, the diopter adjustment mechanism 20 of the first embodiment is provided with a click mechanism. The click mechanism is configured to rotate the diopter adjustment dial 5 at the time of diopter adjustment, and thereby continuously generate a clicking sound according to the rotation. The click mechanism has a click ball 21 in contact with the teeth of the first gear 17, and a spring 36 energizing the click ball 21 against the teeth of the first gear 17 with a desired pressure (see Fig. 9). As described above, since the diopter adjustment mechanism 20 is provided with the click mechanism, the click ball 21 comes into contact with the teeth of the first gear 17 in accordance with rotation of the diopter adjustment dial 5 and continuously generates a clicking sound. Since the click mechanism is thus provided in the diopter adjustment mechanism 20, it is possible to give the user (operator) an operation feel at the time of diopter adjustment, and also to assist stopping of the diopter adjustment dial 5 at an arbitrary rotational position.

Note that while the configuration of the first embodiment includes the click mechanism for continuously generating the clicking sound in the gear portion as described above, the present invention is not limited to such a configuration. For example, unevenness of another shape may be provided on the shaft body 29 to form a click mechanism.

The diopter adjustment mechanism 20 of the first embodiment is configured such that the shaft body 29 including the diopter adjustment dial 5 is held so as to be rotatable by the bearing portions (31, 32) in the vicinity of both ends of the shaft body 29, and is also held so as to be slidable in the axial direction (longitudinal direction). For this reason, the shaft body 29 is securely disposed in a predetermined position, does not wobble, is held securely, and can rotate and slide in a smooth and highly reliable manner.

Furthermore, in the diopter adjustment mechanism 20 of the first embodiment, the dustproof portion 30 surrounds the shaft body 29 to prevent entry of foreign matter from the bearing portion of the shaft body 29 through the gap generated by providing the diopter adjustment dial 5. Since the shaft body 29 of the diopter adjustment mechanism 20 of the first embodiment is configured to slide as well as rotate, the dustproof portion 30 surrounding the shaft body 29 is also configured to slide on the outer peripheral surface of the shaft body 29. The dustproof portion 30 includes the dustproof ring 15 penetrated by the shaft body 29 and movable, and the ring stopper 13 limiting the position of the dustproof ring 15. By thus providing the dustproof portion 30 around the shaft body 29, the diopter adjustment mechanism 20 of the first embodiment is configured to reliably block the first space A continuous with the arrangement space of the diopter adjustment dial 5 from the second space B continuous with the arrangement space of the lens unit 6, the display 9, and the like in the space around the shaft body 29. As a result, in the diopter adjustment mechanism 20, it is possible to prevent entry of foreign matter from the first space A to the second space B.

Note that the finder unit 10 including the diopter adjustment mechanism 20 of the camera of the first embodiment is unitized, and the finder unit 10 can be independently applied to various optical instruments. An optical instrument to which the finder unit 10 is applied in this manner has an excellent configuration that exhibits effects similar to those of the camera of the first embodiment.

Further, the diopter adjustment mechanism 20 forming the finder unit 10 can also be unitized and be applied to various optical instruments. A unitized diopter adjustment mechanism has bearing portions (31, 32) formed in the vicinity of both ends of a shaft body, and a dustproof portion (30) having a dustproof ring (15) movable on the shaft body, and includes at least any one of a push-action mechanism that causes a diopter adjustment dial to be repeatedly stored and protruded, and a gear stopper mechanism that inhibits diopter adjustment to prevent inadvertent adjustment of the diopter.

Note that in the manufacturing stage of the diopter adjustment mechanism configured as described above, in the stage before attaching the diopter adjustment mechanism to an external case of an optical instrument such as a camera, the front shaft (33a) of the shaft body (29) is held by the bearing portion (32) and the rear shaft (33b) of the shaft body (29) is temporarily held by the dustproof portion (30) to form a unitized structure stored inside the gear case (19). As described above, the unitized structure in which the shaft body (29) is held inside the gear case (19) enables the dustproof portion (30) to absorb variations in the position of the mounting parts, and to provide the bearing portion in the outermost part of the optical instrument. Accordingly, by using the diopter adjustment mechanism unitized in this way for the optical instrument, the position of the diopter adjustment mechanism with respect to the external case of the optical instrument can be configured with high accuracy. In addition, the workability at the time of assembling the diopter adjustment mechanism to the external case or the like of the optical instrument is improved, and the assembling work is facilitated.

As has been specifically described in the first embodiment, the diopter adjustment mechanism and the optical instrument including the diopter adjustment mechanism of the present invention can prevent entry of foreign matter into the inside of the optical instrument. This can give the user an excellent impression in terms of appearance, ease of operation, and feel of operation, and improve reliability. In the diopter adjustment mechanism of the present invention, wobbling of the diopter adjustment dial exposed to the outside of the optical instrument is prevented, and smooth rotation of the diopter adjustment dial is ensured. Since the diopter adjustment mechanism of the present invention is provided with the dustproof portion, even if foreign matter enters through the gap around the diopter adjustment dial, entry of the foreign matter into the arrangement space (second space B) of the lens unit and the like can be prevented. Hence, reliability as an optical instrument can be improved.

### Industrial Applicability

Since the present invention can provide a highly reliable diopter adjustment mechanism, reliability of various optical instruments can be improved. Hence, the invention has high market value.

## Claims

1. A diopter adjustment mechanism for an optical instrument (1), the diopter adjustment mechanism (20) comprising:
a shaft body (29) that has a diopter adjustment dial (5) operated to perform diopter adjustment on a lens (6) provided in a finder (10), and is integrally rotated in response to an operation of the diopter adjustment dial (5);
a driving unit (17, 18) that moves the lens (6) in an optical axis direction (X) by rotation of the shaft body (29);
bearing portions (31, 32) that rotatably hold the shaft body (29) in the vicinity of both ends of the shaft body (29); and
a dustproof portion (30);
**characterized in that**
the dustproof portion (30) that is arranged between the bearing portions (31, 32) of the shaft body (29), and blocks a first space (A) continuous with an arrangement space of the diopter adjustment dial (5) from a second space (B) continuous with an arrangement space of the lens (6) in a space around the shaft body (29), wherein
the diopter adjustment dial (5) is configured to be moved between a protruded position from the optical instrument (1) and a stored position in the optical instrument (1), and to drive the lens (6) in the optical axis direction (X) by the rotation of the diopter adjustment dial (5) at the protruded position for performing the diopter adjustment,
the dustproof portion (30) is configured to be circumferentially rotatable with respect to an outer peripheral surface of the shaft body (29) when the diopter adjustment dial (5) is rotated for driving the lens (6) in the optical axis direction (X), and
the dustproof portion (30) is configured to be slidable on the shaft body (29) in an axial direction of the shaft body (29)
when the diopter adjustment dial (5) is moved between the protruded position and the stored position.

2. The diopter adjustment mechanism according to claim 1, wherein:
the dustproof portion (30) includes
a dustproof ring (15) penetrated by the shaft body (29), and slidable in the axial direction with respect to the outer peripheral surface of the shaft body (29), and
a ring stopper (13) circumferentially rotatable with respect to the outer peripheral surface of the shaft body (29), and defining a position of the dustproof ring (15) in the axial direction of the shaft body (29);
the ring stopper (13) is joined to a member (16) integrally formed with a member (19) including the bearing portion (32); and
the dustproof ring (15) is held so as to be freely movable around the shaft body (29).

3. The diopter adjustment mechanism according to claim 1 or 2, wherein
one of the bearing portions (31, 32) is configured to hold an outer peripheral surface of the diopter adjustment dial (5).

4. The diopter adjustment mechanism according to any one of claims 1 to 3, wherein
the diopter adjustment dial (5) is configured to repeat stored and protruded states with respect to a main body of the optical instrument (1) each time the diopter adjustment dial (5) is pressed in the axial direction.

5. The diopter adjustment mechanism according to claim 4 further comprising a stopper (27) that inhibits rotation of the shaft body (29) in the stored state of the diopter adjustment dial (5).

6. The diopter adjustment mechanism according to claim 5, wherein
the stopper (27) is configured to come off an engaging portion provided on the shaft body (29) in transition from the stored state to the protruded state of the diopter adjustment dial (5).

7. The diopter adjustment mechanism according to any one of claims 1 to 6 further comprising a click ball (21) pressed against an unevenness formed in the shaft body (29), wherein a clicking sound is generated in accordance with rotation of the diopter adjustment dial (5).

8. An optical instrument comprising the diopter adjustment mechanism (20) according to any one of claims 1 to 7.

## Patentansprüche

1. Dioptrienanpassungs-Mechanismus für ein optisches Instrument (1), wobei der Dioptrienanpassungs-Mechanismus (20) umfasst:
einen Wellenkörper (29), der einen Dioptrienanpassungs-Drehknopf (5) aufweist, der betätigt wird, um Dioptrienanpassung an einer in einem Sucher (10) vorhandenen Linse (6) durchzuführen, und der in Reaktion auf eine Betätigung des Dioptrienanpassungs-Drehknopfes (5) integral gedreht wird;
eine Antriebs-Einheit (17, 18), die die Linse (6) durch Drehung des Wellenkörpers (29) in einer Richtung der optischen Achse (X) bewegt;
Lagerabschnitte (31, 32), die den Wellenkörper (29) drehbar in der Nähe beider Enden des Wellenkörpers (29) halten; und
einen staubdichten Abschnitt (30);
**dadurch gekennzeichnet, dass**
der staubdichte Abschnitt (30) zwischen den Lagerabschnitten (31, 32) des Wellenkörpers (29) angeordnet ist und in einem Raum um den Wellenkörper (29) herum einen ersten Raum (A), der sich an einen Anordnungsraum des Dioptrienanpassungs-Drehknopfes (5) anschließt, gegenüber einem zweiten Raum (B) abschirmt, der sich an einen Anordnungsraum der Linse (6) anschließt, wobei
der Dioptrienanpassungs-Drehknopf (5) so ausgeführt ist, dass er zwischen einer aus dem optischen Instrument (1) ausgefahrenen Position und einer in dem optischen Instrument (1) aufgenommenen Position bewegt wird, und die Linse (6) durch die Drehung des Dioptrienanpassungs-Drehknopfes (5) in der Richtung der optischen Achse (X) an der ausgefahrenen Position bewegt, um die Dioptrienanpassung durchzuführen,
der staubdichte Abschnitt (30) so ausgeführt ist, dass er in Bezug auf eine Außenumfangsfläche des Wellenkörpers (29) in Umfangsrichtung gedreht werden kann, wenn der Dioptrienanpassungs-Drehknopf (5) gedreht wird, um die Linse (6) in der Richtung der optischen Achse (X) zu bewegen, und
der staubdichte Abschnitt (30) so ausgeführt ist, dass er an dem Wellenkörper (29) in einer axialen Richtung des Wellenkörpers (29) verschoben werden kann, wenn der Dioptrienanpassungs-Drehknopf (5) zwischen der ausgefahrenen Position und der aufgenommenen Position bewegt wird.

2. Dioptrienanpassungs-Mechanismus nach Anspruch 1, wobei:
der staubdichte Abschnitt (30) enthält:
einen staubdichten Ring (15), durch den sich der Wellenkörper (29) hindurch erstreckt und der in der axialen Richtung in Bezug auf die Außenumfangsfläche des Wellenkörpers (29) verschoben werden kann, sowie
einen Ring-Anschlag (13), der in Bezug auf die Außenumfangsfläche des Wellenkörpers (29) in Umfangsrichtung gedreht werden kann und eine Position des staubdichten Rings (15) in der axialen Richtung des Wellenkörpers (29) bestimmt;
der Ring-Anschlag (13) mit einem Element (16) verbunden ist, das integral mit einem Element (19) ausgebildet ist, das den Lagerabschnitt (32) einschließt; und
der staubdichte Ring (15) so gehalten wird, dass er frei um den Wellenkörper (29) herum bewegt werden kann.

3. Dioptrienanpassungs-Mechanismus nach Anspruch 1 oder 2, wobei
einer der Lagerabschnitte (31, 32) so ausgeführt ist, dass er eine Außenumfangsfläche des Dioptrienanpassungs-Drehknopfes (5) hält.

4. Dioptrienanpassungs-Mechanismus nach einem der Ansprüche 1 bis 3, wobei
der Dioptrienanpassungs-Drehknopf (5) so ausgeführt ist, dass er Zustände, in denen er in Bezug auf einen Hauptkörper des optischen Instruments (1) ausgefahren und aufgenommen ist, jedes Mal wiederholt, wenn der Dioptrienanpassungs-Drehknopf (5) in der axialen Richtung gedrückt wird.

5. Dioptrienanpassungs-Mechanismus nach Anspruch 4, der des Weiteren einen Anschlag (27) umfasst, der Drehung des Wellenkörpers (29) in dem aufgenommenen Zustand des Dioptrienanpassungs-Drehknopfes (5) hemmt.

6. Dioptrienanpassungs-Mechanismus nach Anspruch 5, wobei
der Anschlag (27) so ausgeführt ist, dass er sich beim Übergang von dem aufgenommenen Zustand zu dem ausgefahrenen Zustand des Dioptrienanpassungs-Drehknopfes (5) von einem an dem Wellenkörper (29) vorhandenen Eingriffsabschnitt löst.

7. Dioptrienanpassungs-Mechanismus nach einem der Ansprüche 1 bis 6, der des Weiteren eine Rastkugel (21) umfasst, die an eine in dem Wellenkörper (29) ausgebildete Unebenheit gedrückt wird, wobei
bei Drehung des Dioptrienanpassungs-Drehknopfes (5) ein Klickgeräusch erzeugt wird.

8. Optisches Instrument, das den Dioptrienanpassungs-Mechanismus (20) nach einem der Ansprüche 1 bis 7 umfasst.

## Revendications

1. Mécanisme de réglage de dioptrie pour un instrument optique (1), le mécanisme de réglage de dioptrie (20) comprenant :
un corps d'axe (29) qui présente une molette de réglage de dioptrie (5) utilisée pour effectuer un réglage de dioptrie sur un objectif (6) installé dans un viseur (10), et tourne intégralement en réaction à une utilisation de la molette de réglage de dioptrie (5) ;
une unité d'entraînement (17, 18) qui déplace l'objectif (6) dans une direction d'axe optique (X) par rotation du corps d'axe (29) ;
des parties de palier (31, 32) qui maintiennent en rotation le corps d'axe (29) à proximité des deux extrémités du corps d'axe (29) ; et
une partie étanche à la poussière (30) ;
**caractérisé en ce que**
la partie étanche à la poussière (30) qui est installée entre les parties de palier (31, 32) du corps d'axe (29), et bloque un première espace (A) continu avec un espace de disposition de la molette de réglage de dioptrie (5) depuis un deuxième espace (B) continu avec un espace de disposition de l'objectif (6) dans un espace autour du corps d'axe (29), dans lequel
la molette de réglage de dioptrie (5) est configurée pour être déplacée entre une position saillante hors de l'instrument optique (1) et une position rentrée dans l'instrument optique (1), et pour entraîner l'objectif (6) dans la direction d'axe optique (X) par la rotation de la molette de réglage de dioptrie (5) sur la position saillante pour procéder au réglage de dioptrie,
la partie étanche à la poussière (30) est configurée pour être mobile en rotation circonférentiellement par rapport à une surface périphérique extérieure du corps d'axe (29) lorsque la molette de réglage de dioptrie (5) est tournée pour entraîner l'objectif (6) dans la direction d'axe optique (X), et
la partie étanche à la poussière (30) est configurée pour être coulissable sur le corps d'axe (29) dans une direction axiale du corps d'axe (29) lorsque la molette de réglage de dioptrie (5) est déplacée entre la position saillante et la position rentrée.

2. Le mécanisme de réglage de dioptrie selon la revendication 1, dans lequel :
la partie étanche à la poussière (30) inclut une bague étanche à la poussière (15) dans laquelle pénètre le corps d'axe (29), et coulissable dans la direction axiale par rapport à la surface périphérique extérieure du corps d'axe (29), et
une butée de bague (13) mobile en rotation circonférentiellement par rapport à la surface périphérique extérieure du corps d'axe (29), et définissant une position de la bague étanche à la poussière (15) dans la direction axiale du corps d'axe (29) ;
la butée de bague (13) est jointe à un élément (16) intégralement constitué d'un élément (19) incluant la partie de palier (32) ; et
la bague étanche à la poussière (15) est maintenue de sorte à être librement mobile autour du corps d'axe (29) .

3. Le mécanisme de réglage de dioptrie selon la revendication 1 ou 2, dans lequel
une des parties de palier (31, 32) est configurée pour maintenir une surface périphérique extérieure de la molette de réglage de dioptrie (5).

4. Le mécanisme de réglage de dioptrie selon l'une quelconque des revendications 1 à 3, dans lequel
la molette de réglage de dioptrie (5) est configurée pour répéter des états rentré et saillant par rapport à un corps principal de l'instrument optique (1) à chaque fois que la molette de réglage de dioptrie (5) est enfoncée dans la direction axiale.

5. Le mécanisme de réglage de dioptrie selon la revendication 4 comprenant en outre une butée (27) qui empêche une rotation du corps d'axe (29) dans l'état rentré de la molette de réglage de dioptrie (5).

6. Le mécanisme de réglage de dioptrie selon la revendication 5, dans lequel
la butée (27) est configurée pour sortir d'une partie de contact disposée sur le corps d'axe (29) en transition de l'état rentré à l'état saillant de la molette de réglage de dioptrie (5).

7. Le mécanisme de réglage de dioptrie selon l'une quelconque des revendications 1 à 6 comprenant en outre une bille de clipsage (21) appuyée contre une irrégularité constituée dans le corps d'axe (29), dans lequel un clic sonore est généré selon une rotation de la molette de réglage de dioptrie (5).

8. Instrument optique comprenant le mécanisme de réglage de dioptrie (20) selon l'une quelconque des revendications 1 à 7.
